# EUROPÄISCHE PATENTSCHRIFT

(11) **EP 3 019 793 B1**
(45) Veröffentlichungstag und Bekanntmachung des Hinweises auf die Patenterteilung: **31.05.2017**
(21) Anmeldenummer: 14781157.4
(22) Anmeldetag: 02.10.2014
(51) Int. Cl.: F23K 5/18, F16L 59/18

(54) **HITZESCHUTZEINSATZ FÜR EINE BRENNSTOFFLEITUNG**
HEAT-PROTECTIVE INSERT FOR A FUEL LINE
INSERT DE PROTECTION CONTRE LA CHALEUR POUR CONDUITE DE CARBURANT

(30) Priorität: 11.10.2013 DE 102013220586
(43) Veröffentlichungstag der Anmeldung: 18.05.2016
(73) Patentinhaber: Siemens Aktiengesellschaft, 80333 München (DE)
(72) Erfinder: BUCHHEIM, Jürgen, 13403 Berlin (DE); BÖTTCHER, Andreas, 40822 Mettmann (DE); HAUSER, Thomas, 15344 Strausberg (DE); LAPP, Patrick, 10367 Berlin (DE)
(86) Internationale Anmeldenummer: PCT/EP2014/071188
(87) Internationale Veröffentlichungsnummer: WO 2015/052078

(56) Entgegenhaltungen:
- WO-A2-99/19670
- FR-A1- 2 622 634
- US-A1- 2011 056 204
- US-A1- 2013 008 169

## Beschreibung

Die Erfindung betrifft einen Hitzeschutzeinsatz für eine Brennstoffleitung, insbesondere umfassend einen Brennstofffilter. Ein Hitzeschutzeinsatz mit den Merkmalen des Oberbegriffs des Anspruchs 1 ist aus dem WO 99/19670 bekannt. Zum Fixieren oder Verbinden von Brennstoffleitungen kommen typischerweise auch Schraubverbindungen zum Einsatz. Diese können sich aber im Betrieb durch Vibration und Temperaturänderungen lösen. Um den Einfluss der Temperaturänderungen zu verringern, wurden Hitzeschutzeinsätze entwickelt, die im Bereich der Schraubverbindungen in die Brennstoffleitungen eingesetzt werden.
Zusätzlich zum Hitzeschutzeinsatz werden üblicherweise Hütchenfilter in die Brennstoffleitungen eingesetzt, um den Brenner vor Verunreinigungen zu schützen. Um den Filter gegen Verlust zu sichern, wird er beispielsweise an einer Stelle, an der zwei Brennstoffrohre miteinander verschraubt werden mit einem Flansch zwischen den beiden Rohren angeordnet und mittels der Verschraubung gesichert.
Wird nun aber ein Hitzeschutzrohr so in der Brennstoffleitung angebracht, dass es die Verschraubung schützt, an der der Filter üblicherweise gesichert ist, kann der Filter dort nicht mehr verbaut werden und eine mögliche Verunreinigung des Brenners ist nicht mehr auszuschließen.
Es gibt zwar die Möglichkeit, den Filter zwischen der Flanschverbindung der Ringleitung und der Stichleitung zum Brenner einzubauen, d.h. in Strömungsrichtung eines Brennstoffs stromauf der bisherigen Stelle. Dies hat u.a. aber den Nachteil, dass Verunreinigungen, die sich in der Gasleitung zwischen Brenner und Filter befinden, in den Brenner gelangen und dort die Brennerdüsen blockieren können.

Aufgabe der Erfindung ist es, die genannte Vorrichtung weiterzuentwickeln, so dass ein hoher Schutz sowohl vor Hitze, also auch vor Verunreinigungen im Brennstoff bei möglichst einfacher Montierbarkeit und kostengünstiger Herstellung gewährleistet wird.
Die Erfindung löst diese Aufgabe, indem sie vorsieht, dass bei einem Hitzeschutzeinsatz für eine Brennstoffleitung, der Hitzeschutzeinsatz einen ersten Teil in Form eines Rohres mit einem Querschnitt und einen an den ersten Teil anschließenden zweiten Teil umfasst, der sich über den Querschnitt erstreckt und zur Erzielung eines Siebeffekts Öffnungen aufweist. Dabei ist es zweckmäßig, wenn der zweite Teil zumindest teilweise als Konus geformt ist. Somit ergibt sich gegenüber dem flachen Filter eine erhöhte Filterfläche.
Besonders einfach herzustellen und daher kostengünstig ist es, wenn die Öffnungen Bohrungen sind.
Ebenfalls im Hinblick auf die Herstellkosten, aber auch im Hinblick auf den sicheren Einbau ist es erfindungsmäßig vorgesehen, dass der erste und der zweite Teil aus einem Stück geformt sind. Besonders vorteilhaft ist es, wenn bei einer Brennstoffleitung, umfassend ein erstes und ein zweites Rohr, die in Längsrichtung hintereinander angeordnet und miteinander verbunden sind, der beschriebene Hitzeschutzeinsatz so in den Rohren angeordnet ist, dass er sich zumindest teilweise in jedes Rohr hinein erstreckt. Auf diese Weise wird insbesondere die Verbindungsstelle besser gegen ein Lösen geschützt. Dabei ist es hinsichtlich Montage und Wartung zweckmäßig, wenn die beiden Rohre über eine Schraubverbindung miteinander verbunden sind.
Damit der Hitzeschutzeinsatz in seiner Position gesichert ist, ist es besonders vorteilhaft, wenn in Strömungsrichtung eines Brennstoffs im stromab angeordneten Rohr an zumindest einer Stelle ein Innendurchmesser kleiner ist als ein Außendurchmesser des Hitzeschutzeinsatzes unmittelbar stromauf dieser Stelle.

Die erfindungsgemäße Vorrichtung ermöglicht bei einfacher Konstruktion und einfachem Einbau eine kostengünstige Lösung im Vergleich zur separaten Ausführung. Neben dem geringen Montageaufwand ist auch der Wartungsaufwand überschaubar, da ein Lösen des Filters nicht mehr möglich ist und somit auch keine Sicherung mehr nötig ist. Überhaupt verzichtet die Vorrichtung auf jegliche beweglichen Teile.

Die Erfindung wird beispielhaft anhand der Zeichnungen näher erläutert. Es zeigen schematisch und nicht maßstäblich:
- Figur 1: eine Brennstoffleitung mit einem Hitzeschutzeinsatz und einem Brennstofffilter nach dem Stand der Technik,
- Figur 2: eine Brennstoffleitung mit verlängertem Hitzeschutzeinsatz ohne Brennstofffilter,
- Figur 3: eine Brennstoffleitung mit einem Hitzeschutzeinsatz mit integriertem Brennstofffilter nach der Erfindung,
- Figur 4: eine Brennstoffleitung mit einem Hitzeschutzeinsatz mit modifiziertem integriertem Brennstofffilter nach der Erfindung und

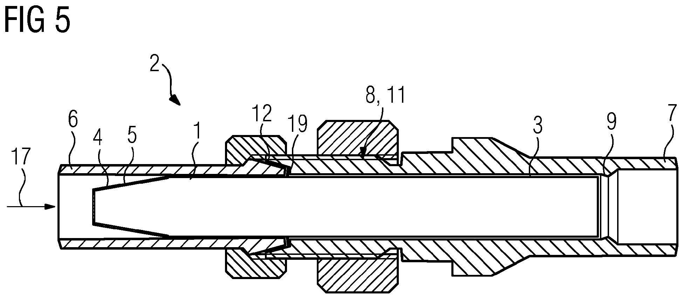

- Figur 5: eine Brennstoffleitung mit einem Hitzeschutzeinsatz mit stromauf angeordnetem integriertem Brennstofffilter nach der Erfindung.

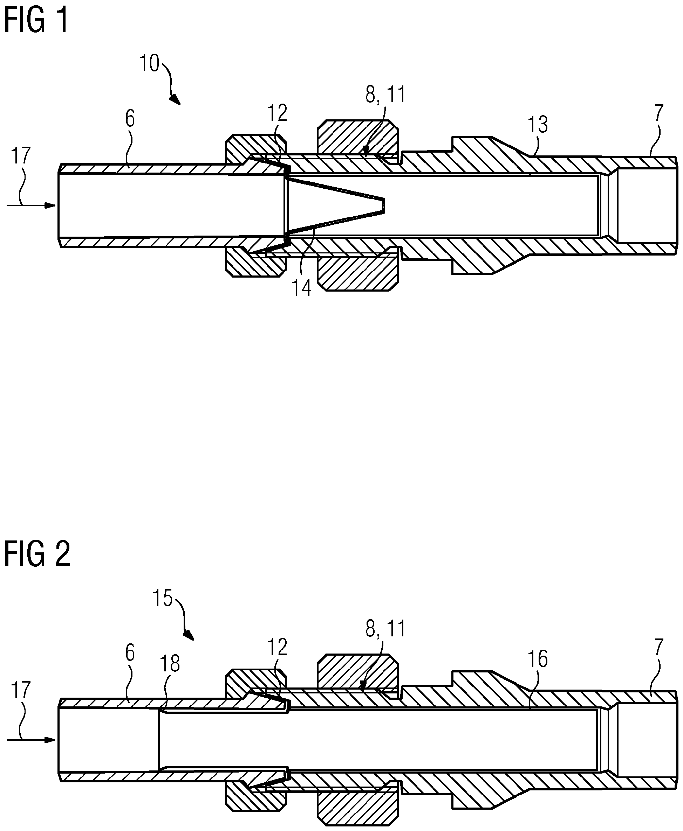

Die Figur 1 zeigt schematisch und beispielhaft eine Brennstoffleitung 10 nach dem Stand der Technik mit einem ersten 6 und einem zweiten Rohr 7, die in Längsrichtung hintereinander angeordnet und miteinander verschraubt sind. Die Brennstoffleitung 10 ist mittels einer Schraubverbindung 8, einer sogenannten Schottverschraubung 11, in einer nicht gezeigten Platte fixiert. Die Verschraubung der beiden Rohre 6, 7 erfolgt mittels eines Kegel-Konus-Systems 12. Der Hitzeschutzeinsatz 13 nach dem Stand der Technik ist im zweiten Rohr 7 angeordnet und bietet so thermischen Schutz für die Schottverschraubung 11. In Strömungsrichtung eines Brennstoffs 17 stromauf des Hitzeschutzeinsatzes 13 ist ein sogenannter Hütchenfilter 14 angeordnet und zwischen den beiden Rohren 6, 7 fixiert, um einen nachgeschalteten Brenner vor Verunreinigungen zu schützen.

Figur 2 zeigt eine weitere Brennstoffleitung 15 nach dem Stand der Technik mit verlängertem Hitzeschutzeinsatz 16, wodurch nun nicht nur die Schottverschraubung 11, sondern auch die Verschraubung mit Kegel-Konus-System 12 thermisch geschützt ist. Durch den verlängerten Hitzeschutzeinsatz 16 entfällt allerdings der Hütchenfilter 14, so dass eine Verunreinigung des Brenners wahrscheinlicher wird. Der Einlaufkonus 18 sorgt für eine gute Abdichtung zwischen Hitzeschutzeinsatz 16 und dem ersten Rohr 6, sowie für einen möglichst durch Einbauten nicht beinträchtigen Fluss des Brennstoffs in der Brennstoffleitung 15.

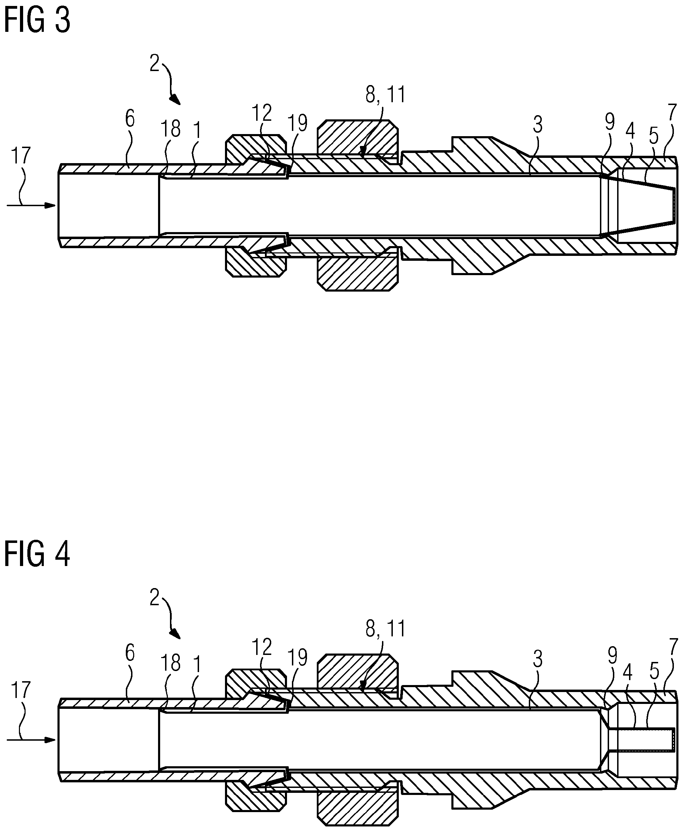

Die durch die Erfindung vorgeschlagene Lösung der Probleme des thermischen Schutzes der Schraubverbindungen sowie der Notwendigkeit, den Brennstoff, bevor er in den Brenner gelangt, möglichst in Brennernähe zu filtern, ist in Figur 3 dargestellt.

Die Figur 3 zeigt nämlich eine Brennstoffleitung 2 umfassend ein erstes 6 und ein zweites Rohr 7, die in Längsrichtung hintereinander angeordnet und im Beispiel der Figur 3 miteinander über eine Schraubverbindung mit Kegel-Konus-System 12 verbunden sind. In den Rohren 6, 7 ist ein Hitzeschutzeinsatz 1, umfassend einen ersten Teil 3 in Form eines Rohres mit einem Querschnitt und einen an den ersten Teil 3 anschließenden zweiten Teil 4, der sich über den Querschnitt erstreckt und zur Erzielung eines Siebeffekts Öffnungen 5 aufweist, so angeordnet, dass er sich zumindest teilweise in jedes Rohr 6, 7 hinein erstreckt.

Es wird also vorgeschlagen, Filter und Hitzeschutzeinsatz als ein Teil herzustellen. Dadurch wird neben dem verbesserten Hitzeschutz für beide Verschraubungen 11, 12 eine potenzielle Verunreinigung vermieden.
Eine zusätzliche Sicherung, wie sie bei einem verschraubten Filter nötig wäre, entfällt. Durch das integrierte Design sinkt der Montage- und Wartungsaufwand. Weil der Hitzeschutzeinsatz 1 aus einem Vollmaterial gedreht wird, ist es möglich, auf der gleichen Maschine Rohr (erster Teil 3) und Konus des Filters (zweiter Teil 4) herzustellen. Anschließend müssen nur noch die feinen Bohrungen 5 des Filters hergestellt werden. Dies kann günstig per Laserbohren, Wasserstrahl schneiden oder Erodieren erfolgen.
Um den Hitzeschutzeinsatz 1 auch an der vorgesehenen Position in der Brennstoffleitung 2 zu sichern, ist in Strömungsrichtung eines Brennstoffs im stromab angeordneten zweiten Rohr 7 an zumindest einer Stelle 9 ein Innendurchmesser kleiner als ein Außendurchmesser des Hitzeschutzeinsatzes 1 unmittelbar stromauf dieser Stelle 9. Weiterhin kann insbesondere im Bereich der Verschraubung mit dem Kegel-Konus-System 12, also dort wo erstes 6 und zweites Rohr 7 aneinanderstoßen der Hitzeschutzeinsatz 1 durch einen umlaufenden Steg 19 oder eine Art Flansch gesichert werden.
Eine alternative Variante um den Fertigungsaufwand allgemein und insbesondere den Aufwand für die Innenbearbeitung zu senken ist in Figur 4 dargestellt. Die dargestellte, nur mit einem konischen Übergang versehene, aber im Wesentlichen zylindrische Form des Filters, also des zweiten Teils 4, erleichtert die Innenbearbeitung z.B. durch Bohren. Hierbei muss das geänderte Filterdesign in Volumen und Durchtrittsfläche dem bisherigen Filterdesign entsprechen.

Da der Filter in zwei verschiedenen Richtungen eingebaut werden kann, gibt es auch die Möglichkeit, den Filter auf die stromaufwärtige Seite des Hitzeschutzeinsatzes 1 zu platzieren. Der Fertigungsaufwand wird bei diesem Ausführungsbeispiel insbesondere durch den Wegfall eines sonst notwendigen Einlaufkonus 18 am stromaufwärtigen Ende des ersten Teils 3 verringert.

## Patentansprüche

1. Hitzeschutzeinsatz (1) für eine Brennstoffleitung (2), umfassend einen ersten Teil (3) in Form eines Rohres mit einem Querschnitt und einen an den ersten Teil (3) anschließenden zweiten Teil (4), der sich über den Querschnitt erstreckt und zur Erzielung eines Siebeffekts Öffnungen (5) aufweist, **dadurch gekennzeichnet, dass** der erste (3) und der zweite Teil (4) aus einem Stück geformt sind.

2. Hitzeschutzeinsatz (1) nach Anspruch 1, wobei der zweite Teil (4) zumindest teilweise als Konus geformt ist.

3. Hitzeschutzeinsatz (1) nach einem der Ansprüche 1 oder 2, wobei die Öffnungen (5) Bohrungen sind.

4. Brennstoffleitung (2) umfassend ein erstes (6) und ein zweites Rohr (7), die in Längsrichtung hintereinander angeordnet und miteinander verbunden sind, **dadurch gekennzeichnet, dass** der Hitzeschutzeinsatz (1) nach einem der vorhergehenden Ansprüche so in den Rohren (6, 7) angeordnet ist, dass er sich zumindest teilweise in jedes Rohr (6, 7) hinein erstreckt.

5. Brennstoffleitung (2), nach Anspruch 4, wobei die beiden Rohre (6, 7) über eine Schraubverbindung (8) miteinander verbunden sind.

6. Brennstoffleitung (2) nach einem der Ansprüche 4 oder 5, wobei in Strömungsrichtung eines Brennstoffs im stromab angeordneten zweiten Rohr (7) an zumindest einer Stelle (9) ein Innendurchmesser kleiner ist als ein Außendurchmesser des Hitzeschutzeinsatzes (1) unmittelbar stromauf dieser Stelle (9).

## Claims

1. Heat-protective insert (1) for a fuel line (2), comprising a first part (3) in the form of a pipe with a cross section and a second part (4) which adjoins the first part (3) and extends over the cross section and has openings (5) to achieve a sieve effect, **characterized in that** the first (3) and second (4) parts are formed from one piece.

2. Heat-protective insert (1) according to Claim 1, wherein the second part (4) is formed at least partially as a cone.

3. Heat-protective insert (1) according to either of Claims 1 and 2, wherein the openings (5) are holes.

4. Fuel line (2) comprising a first (6) and a second (7) pipe which are arranged one behind the other in the longitudinal direction and are connected to one another, **characterized in that** the heat protective insert (1) according to one of the preceding claims is arranged in the pipes (6, 7) such that it extends at least partially into each pipe (6, 7).

5. Fuel line (2) according to Claim 4, wherein the two pipes (6, 7) are connected to one another by means of a screw connection (8).

6. Fuel line (2) according to either of Claims 4 and 5, wherein, in the flow direction of a fuel, at at least one point (9) in the downstream, second pipe (7) an inner diameter is smaller than an outer diameter of the heat-protective insert (1) immediately upstream of this point (9).

## Revendications

1. Insert (1) de protection vis-à-vis de la chaleur pour un conduit (2) pour du carburant, comprenant une première partie (3), sous la forme d'un tube ayant une section transversale, et une deuxième partie (4), qui se raccorde à la première partie (3), qui s'étend sur la section transversale et qui, pour obtenir un effet de tamisage, a des ouvertures (5), **caractérisé en ce que** la première partie (3) et la deuxième partie (4) sont formées en une pièce.

2. Insert (1) de protection vis-à-vis de la chaleur suivant la revendication 1, dans lequel la deuxième partie (4) est conformée, au moins en partie, sous la forme d'un cône.

3. Insert (1) de protection vis-à-vis de la chaleur suivant l'une des revendications 1 ou 2, dans lequel les ouvertures (5) sont des trous.

4. Conduit (2) pour du carburant, comprenant un premier tube (6) et un deuxième tube (7), qui sont disposés l'un derrière l'autre dans la direction longitudinale et qui sont reliés entre eux, **caractérisé en ce que** l'insert (1) de protection vis-à-vis de la chaleur, suivant l'une des revendications précédentes, est mis dans les tubes (6, 7), de manière à s'étendre, au moins en partie, dans chaque tube (6, 7).

5. Conduit (2) pour du carburant suivant la revendication 4, dans lequel les deux tubes (6, 7) sont reliés entre eux par un vissage (8).

6. Conduit (2) pour du carburant suivant l'une des revendications 4 ou 5, dans lequel un diamètre intérieur d'un deuxième tube (7), disposé en aval dans le sens d'écoulement d'un carburant, est, en au moins un point (9), plus petit qu'un diamètre extérieur de l'insert (1) de protection vis-à-vis de la chaleur immédiatement en amont de ce point (9).
